# EUROPÄISCHE PATENTANMELDUNG

(11) **EP 3 159 833 A2**
(43) Veröffentlichungstag der Anmeldung: **26.04.2017**
(21) Anmeldenummer: 16191886.7
(22) Anmeldetag: 30.09.2016
(51) Int. Cl.: G06K 19/077, B32B 1/00, B65D 81/00, B65D 51/24, G09F 3/00, A47J 39/00

(54) **GASTRONORM-BEHÄLTER MIT OPTISCHEM CODE**

(30) Priorität: 20.10.2015 DE 102015013567
(71) Anmelder: Rieber AG, 8360 Eschlikon (CH)
(72) Erfinder: Maier, Max, 71636 Ludwigsburg (DE)
(74) Vertreter: Schumacher & Willsau

(57) **Zusammenfassung**

Die Erfindung betrifft einen Gastronorm-Behälter (10), der zur eindeutigen Identifizierbarkeit auf seiner Außenseite einen optisch erfassbaren Code (12) trägt.

Erfindungsgemäß ist vorgesehen, dass der optisch erfassbare Code (12) mittels eines Klebeetiketts (14) aufgebracht ist, dass das Klebeetikett (14) einen Acrylatkleber (16) und eine Folie (18) umfasst, auf die der optisch erfassbare Code (12) aufgedruckt ist, und dass die Folie (18) mit ihrer nicht bedruckten Seite mit Hilfe des Acrylatklebers (16) so auf die Außenseite des Gastronorm-Behälters (10) aufgeklebt ist, dass sie ohne Zerstörung nicht mehr ablösbar ist, wobei das Klebeetikett (14) dazu ausgelegt ist, den Gastronorm-Behälter (10) ohne Beschädigung des Klebeetiketts (14) in einem Temperaturbereich von -40 °C bis 180 °C dauerhaft verwenden zu können.

## Beschreibung

Die Erfindung betrifft einen Gastronorm-Behälter, der zur eindeutigen Identifizierbarkeit auf seiner Außenseite einen optisch erfassbaren Code trägt.

Bei dem Gastronorm-System handelt es sich um ein weltweit gebräuchliches Behältersystem, das durch die Verwendung genormter Größen einen einfachen Austausch von Lebensmittelbehältern ermöglicht und das beispielsweise in lebensmittelverarbeitenden Betrieben sowie in Großküchen Verwendung findet. Ein Gastronorm-Behälter ist demnach ein Behälter, der sich vorwiegend zum Zubereiten und Bereithalten von warmen und kalten Speisen, aber auch zum Aufbewahren von Lebensmitteln aller Art eignet. Die Behälter sind beispielsweise aus Edelstahl, Aluminium, Glas oder Porzellan. Gastronorm-Behälter sind grundsätzlich ineinander stapelbar, spülmaschinenfest und so robust, dass sie auch bei täglicher intensiver Benutzung in einer Großküche lange verwendet werden können, ohne beschädigt zu werden.

Insbesondere um die Anforderungen des HACCP-Konzepts (HACCP = Hazard Analysis and Critical Control Points) zu erfüllen, werden zunehmend intelligente Food-Flow-Systeme eingesetzt, wie beispielsweise das °Check^{®}-System der Firma Rieber. Das Ziel dieses Systems besteht darin, die HACCP-relevanten Daten nicht mehr manuell auf Papier festzuhalten und in Ordnern abzulegen, sondern diese Daten digital zu erfassen und an eine vorzugsweise zentrale Datenbank weiterzugeben. Dies spart Zeit, senkt die Kosten und gibt dem Verantwortlichen die Möglichkeiten, die relevanten Vorgänge in Echtzeit zu überprüfen und gegebenenfalls zu handeln. Beispielsweise ist es möglich, jederzeit zu überprüfen, welche Speisen sich wo, mit welcher Temperatur befinden und wie die jeweilige Hygiene-Situation ist. Um dies zu ermöglichen, ist es erforderlich, die verwendeten Gastronorm-Behälter mithilfe eines geeigneten Codes eindeutig identifizieren zu können.

Um Gastronorm-Behälter eindeutig identifizieren zu können, schlägt die WO 2007/042248 A1 bereits vor, die Gastronorm-Behälter mit RFID-Transpondern auszustatten, die bei der Herstellung der Gastronorm-Behälter in deren Böden oder Seitenwände integriert werden. Ein derartiger RFID-Transponder stellt jedoch keinen optisch erfassbaren Code dar, sondern einen (intelligenten) Speicherchip, der berührungslos mit speziell dafür vorgesehenen externen Geräten kommuniziert. Die Nutzung der RFID-Technologie im Zusammenhang mit Gastronorm-Behältern ist daher relativ kostenintensiv. Weiterhin weisen RFID-Transponder in der Regel eine eingeschränkte Temperaturbeständigkeit auf, was insbesondere bei der Zubereitung von Speisen zu Problemen führen kann.

Um die mit RFID-Transpondern verbundenen Probleme zu umgehen, setzt beispielsweise das °Check^{®}-System der Firma Rieber auf optisch erfassbare Codes, insbesondere in Form von QR-Codes. Diese QR-Codes können mit handelsüblichen Smartphones erfasst werden, die mit einer zentralen Datenbank in Verbindung stehen oder gebracht werden können, wo die relevanten Daten verwaltet werden. Dabei ist es beispielsweise möglich, Temperaturen mit handgehaltenen Temperaturfühlern zu erfassen, die beispielsweise über Bluetooth mit dem Smartphone in Verbindung stehen. Somit greift das System zu einem großen Teil auf ohnehin vorhandenes technisches Equipment zurück, was zur Kostensenkung beiträgt. Sofern Gastronorm-Behälter mit einem QR-Code zu versehen waren, war es bisher üblich, den QR-Code in Form einer Lasergravur auf dem Gastronorm-Behälter vorzusehen. Eine Lasergravur ist in nachvollziehbarer Art und Weise hitzeunempfindlich und nicht ohne weiteres wieder zu entfernen. Darüber hinaus sind Lasergravuren lebensmittelecht, das heißt für den (direkten) Kontakt mit Lebensmitteln zugelassen. Allerdings ist es sehr aufwendig beispielsweise bereits beim Kunden befindliche Gastronorm-Behälter nachträglich mit einer entsprechenden Lasergravur auszustatten, weil die Behälter zu diesem Zweck vom Kunden zurückgeholt und entsprechend bearbeitet werden müssen.

Es ist daher die Aufgabe der Erfindung, einen gattungsgemäßen Gastronorm-Behälter zur Verfügung zu stellen, bei dem der optisch erfassbare Code in kostengünstiger Weise und gegebenenfalls auch nachträglich angebracht wurde.

Diese Aufgabe wird mit den Merkmalen des Anspruchs 1 gelöst.

Vorteilhafte Ausgestaltungen und Weiterbildungen der Erfindung ergeben sich aus den abhängigen Ansprüchen.

Der erfindungsgemäße Gastronorm-Behälter baut auf dem gattungsgemäßen Stand der Technik dadurch auf, dass der optisch erfassbare Code mittels eines Klebeetiketts aufgebracht ist, dass das Klebeetikett einen Acrylatkleber und eine Folie umfasst, auf die der optisch erfassbare Code aufgedruckt ist, und dass die Folie mit ihrer nicht bedruckten Seite mithilfe des Acrylatklebers so auf die Außenseite des Gastronorm-Behälters aufgeklebt ist, dass sie ohne Zerstörung nicht mehr ablösbar ist, wobei das Klebeetikett dazu ausgelegt ist, den Gastronorm-Behälter ohne Beschädigung des Klebeetiketts in einem Temperaturbereich von -40 °C bis 180 °C dauerhaft verwenden zu können. Es hat sich nämlich überraschender Weise herausgestellt, dass ein derartiges Klebeetikett sämtliche Anforderungen erfüllt, die im Gastronorm-Umfeld gestellt werden. Dies gilt insbesondere auch für die Temperaturanforderungen, wobei der für den Dauereinsatz angegebene Temperaturbereich zwischen -40 °C und 180 °C kurzfristig durchaus (deutlich) überschritten werden kann, beispielsweise für einige Minuten auf bis zu 250 °C, ohne dass eine Beschädigung oder Ablösung des Klebeetiketts zu befürchten ist. Dabei ist die Verwendung eines derartigen Klebeetiketts kostengünstig und das Klebeetikett kann gegebenenfalls auch nachträglich auf dem Gastronorm-Behälter aufgebracht werden, beispielsweise vom Besitzer des Gastronorm-Behälters.

Bei bevorzugten Ausführungsformen des erfindungsgemäßen Gastronorm-Behälters ist vorgesehen, dass es sich bei der Folie um eine gegossene Acrylatfolie handelt. Solche Acrylatfolien, die beispielsweise eine Dicke im Bereich von 0,01 mm und 0,1 mm aufweisen können, sind ausreichend robust und vor allem zur Verwendung mit einem Acrylatkleber hervorragend geeignet.

Im Rahmen der Erfindung wird es weiterhin als vorteilhaft erachtet, dass es sich bei dem Acrylatkleber um einen PNS-Acrylatkleber (PNS = permanent haftender Niedrigtemperatur-Sonderklebstoff) handelt. Mit einem derartigen Kleber kann die Folie so an dem Gastronorm-Behälter befestigt werden, dass sie ohne Zerstörung nicht mehr ablösbar ist, ähnlich, wie man dies beispielsweise von deutschen TÜV-Plaketten auf Kraftfahrzeugkennzeichen kennt.

Besonders bevorzugt werden erfindungsgemäße Gastronorm-Behälter, bei denen vorgesehen ist, dass das Klebeetikett ein Schutzlaminat umfasst, mit dem der aufgedruckte Code abgedeckt ist. Auf diese Weise lässt sich der aufgedruckte Code wirkungsvoll schützen, und es besteht auch bei einer intensiven Verwendung des Gastronorm-Behälters nicht die Gefahr, dass der Code unlesbar wird. Gegebenenfalls kann das Schutzlaminat einen über den Rand der Folie überstehenden Randbereich aufweisen, um einen Kontakt von Lebensmitteln und dem Rand der Folie und/oder des zum Drucken des Codes verwendeten Materials vollständig auszuschließen, falls dies erwünscht ist.

Im vorstehend erläuterten Zusammenhang wird es als vorteilhaft (und zumindest im professionellen Umfeld als erforderlich) angesehen, dass das Schutzlaminat lebensmittelecht ist. Das heißt, das Schutzlaminat ist speziell an die Anforderungen im Hinblick auf den (direkten) Kontakt mit Lebensmitteln angepasst, so dass beispielsweise das zum Drucken des Codes verwendete Material nicht zwingend lebensmittelecht sein muss, weil dieses Material nicht mit Lebensmitteln in Kontakt kommen kann. Dies gilt umso mehr, seit aufgrund von jüngeren Gesetzesänderungen nicht mehr zwischen direktem und indirektem Lebensmittelkontakt unterschieden wird, also auch dann die höheren Anforderungen erfüllt werden müssen, wenn das Klebeetikett auf der Außenseite des Gastronorm-Behälters vorgesehen ist, wo es normalerweise nicht direkt mit Lebensmitteln in Berührung kommt.

Weiterhin wird es im vorstehend erläuternden Zusammenhang als vorteilhaft angesehen, wenn vorgesehen ist, dass das Schutzlaminat eine durchsichtige gegossene Acrylatfolie ist, die mit einem Acrylatkleber auf die bedruckte Seite der Folie aufgeklebt ist. Ein besonders homogener Aufbau ergibt sich, wenn sowohl die Folie als auch das Schutzlaminat durch eine Acrylatfolie gebildet sind und es sich bei beiden Klebeschichten um Acrylatkleber-Schichten handelt.

Für alle Ausführungsformen des erfindungsgemäßen Gastronorm-Behälters wird bevorzugt, dass der optisch erfassbare Code mittels Thermotransferdruck auf die Folie aufgedruckt ist. Als Thermotransfer-Folien kommen beispielsweise und ohne darauf beschränkt zu sein Polyesterfolien in Betracht, weil diese besonders temperaturbeständig sind. Durch das Thermotransfer-Verfahren lassen sich eine sehr gute Druckauflösung und ein hoher Druckkontrast erzielen.

Bei bevorzugten Ausführungsformen des erfindungsgemäßen Gastronorm-Behälters ist vorgesehen, dass der optisch erfassbare Code einen maschinenlesbaren Codeabschnitt und einen menschenlesbaren Codeabschnitt umfasst. Bei dem maschinenlesbaren Codeabschnitt handelt es sich vorzugsweise um einen Codeabschnitt, der mithilfe einer üblichen Smartphone-Kamera abfotografiert und dann mit einer entsprechenden App ausgewertet werden kann. Bei dem menschenlesbaren Codeabschnitt kann es sich insbesondere um einen Codeabschnitt aus Buchstaben und/oder Zahlen handeln.

In diesem Zusammenhang wird es als vorteilhaft erachtet, dass die durch den menschenlesbaren Codeabschnitt dargestellte Information auch in der durch den maschinenlesbaren Codeabschnitt dargestellten Information enthalten ist. Dabei ist es durchaus denkbar, dass der maschinenlesbare Codeabschnitt auch zusätzliche Informationen enthält, die in dem menschenlesbaren Codeabschnitt nicht enthalten sind. In einem solchen Fall bildet die durch den menschenlesbaren Codeabschnitt dargestellte Information eine Teilmenge der durch den maschinenlesbaren Codeabschnitt dargestellten Information.

Dabei wird es in vielen Fällen als vorteilhaft erachtet, dass ein erster Teil des menschenlesbaren Codeabschnitts eine eindeutige Kennung und ein zweiter Teil des menschenlesbaren Codeabschnitts eine im Hinblick auf die eindeutige Kennung eindeutige ansonsten aber mehrdeutige Kennung aufweist. In einem solchen Fall kann der erste Teil des menschenlesbaren Codeabschnitts beispielsweise eine Buchstabenkombination sein, die einem bestimmten Kunden, beispielsweise dem Betreiber einer Großküche, eindeutig zugeordnet ist. Der zweite Teil des menschenlesbaren Codeabschnitts kann dann, beispielsweise durch eine fortlaufende Nummer gebildet sein, so dass jeder Gastronorm-Behälter (und gegebenenfalls natürlich auch weitere Gegenstände) dieses Kunden eindeutig gekennzeichnet sind oder gekennzeichnet werden können. Somit ist es beispielsweise möglich, dass sämtliche fortlaufende Nummern für verschiedene Kunden mit 1 beginnen, so dass es sich bei dem zweiten Teil des menschenlesbaren Codeabschnitts nicht um einen eindeutigen Code handelt. Die eindeutige Identifizierbarkeit ergibt sich dann aus der für einen Kunden immer gleichen Buchstabenkombination und der fortlaufenden Nummer.

Wie vorstehend bereits erwähnt, wird es für alle Ausführungsformen des erfindungsgemäßen Gastronorm-Behälters als besonders vorteilhaft erachtet, wenn vorgesehen ist, dass der maschinenlesbare Codeabschnitt in Form eines QR-Codes vorliegt. Dies schließt die Verwendung anderer Codes selbstverständlich nicht grundsätzlich aus, so dass beispielsweise auch Barcodes und dergleichen verwendet werden können, wenn dies aus irgendwelchen Gründen vorteilhaft erscheint.

Beispielsweise im Zusammenhang mit dem eingangserwähnten °Check^{®}-System der Firma Rieber wird es als besonders vorteilhaft erachtet, dass der optische Code mindestens ein Datenbankfeld in einer zentralen Datenbank referenziert, das Informationen über wenigstens ein Element der folgenden Gruppe enthält: Besitzer des Gastronorm-Behälters, Eigentümer des Gastronorm-Behälters, Inhalt des Gastronorm-Behälters, Hersteller des Inhalts des Gastronorm-Behälters, Haltbarkeit des Inhalts des Gastronorm-Behälters, Soll-Temperatur des Inhalts des Gastronorm-Behälters, zu einem früheren Zeitpunkt erfasste Ist-Temperatur des Inhalts des Gastronorm-Behälters, Transportweg des Gastronorm-Behälters, Ziel des Gastronorm-Behälters, Herkunft des Gastronorm-Behälters. Auf diese Weise lassen sich alle Anforderungen des HACCP-Konzepts zeitsparend und kostengünstig erfüllen.

Jedes Klebeetikett, das in Verbindung mit einem handelsüblichen Gastronorm-Behälter zur Schaffung eines erfindungsgemäßen Gastronorm-Behälters geeignet ist, fällt in den Schutzbereich der zugehörigen Ansprüche.

Gleiches gilt auch für einen Bogen mit einer Mehrzahl von derartigen Klebeetiketten, insbesondere wenn der menschenlesbare Codeabschnitt einen kundenspezifischen ersten Teil und einen eine fortlaufende Nummer aufweisenden zweiten Teil umfasst.

Ein Ausführungsbeispiel der Erfindung wird nachfolgend anhand der Zeichnungen beispielhaft erläutert. Es zeigen:
- Figur 1: eine perspektivische Darstellung eines erfindungsgemäßen GastronormBehälters;
- Figur 2: eine Detailansicht des auf dem Gastronorm-Behälter von Figur 1 aufgebrachten Klebeetiketts;
- Figur 3: eine Schnittansicht des Klebeetiketts von Figur 2 entlang der Schnittlinie A-A; und
- Figur 4: eine schematische Darstellung einer zentralen Datenbank mit der der maschinenlesbare Code des Klebeetiketts von Figur 2 verknüpft ist.

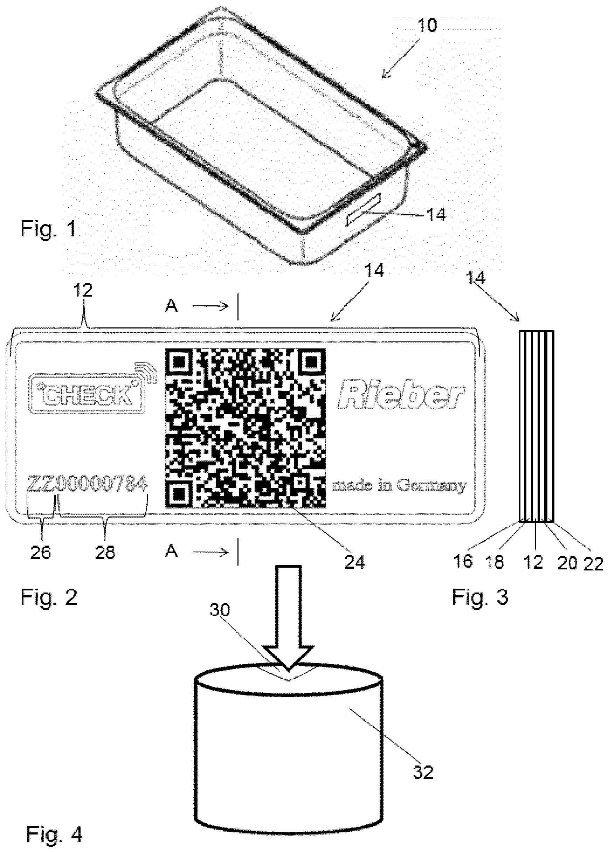

Figur 1 zeigt eine perspektivische Darstellung eines erfindungsgemäßen Gastronorm-Behälters. Dabei handelt es sich um einen Gastronorm-Behälter aus Edelstahl, wobei Edelstahl das für alle Ausführungsformen des erfindungsgemäßen Gastronorm-Behälters bevorzugte Material darstellt. Der insgesamt mit 10 bezeichnete Gastronorm-Behälter weist außen auf seiner vorderen Stirnseite ein Klebeetikett 14 auf, dass nachfolgend anhand der Figuren 2 und 3 näher erläutert wird.

Figur 2 zeigt eine Detailansicht des auf dem Gastronorm-Behälter von Figur 1 aufgebrachten Klebeetiketts. Das Klebeetikett 14 weist neben dem °Check^{®}- und dem Rieber-Logo sowie der Beschriftung "made in Germany" einen maschinenlesbaren Codeabschnitt 24 und einen menschenlesbaren Codeabschnitt 26, 28 auf, wodurch insgesamt ein optisch erfassbarer Code 12 geschaffen ist. Der menschenlesbare Codeabschnitt 26, 28 umfasst einen ersten Teil 26 und einen zweiten Teil 28, wobei der erste Teil 26 des menschenlesbaren Codeabschnitts 26, 28 eine eindeutige Kennung - im dargestellten Fall ZZ - aufweist, die beispielsweise einem bestimmten Kunden eindeutig zugeordnet ist. Der zweite Teil 28 des menschenlesbaren Codeabschnitts 26, 28 ist im dargestellten Fall durch die Ziffernfolge 00000784 gebildet, wobei 784 beispielsweise die laufende Inventarnummer des durch ZZ identifizierten Kunden ist. Zusammen bilden der erste Teil 26 und der zweite Teil 28 des menschenlesbaren Codeabschnitts 26, 28 einen eindeutigen, das heißt einmaligen Code. Die in dem menschenlesbaren Codeabschnitt 26, 28 enthaltene Information ist auch in dem maschinenlesbaren Codeabschnitt 24 enthalten, der durch einen QR-Code verwirklicht ist.

Figur 3 zeigt eine Schnittansicht des Klebeetiketts von Figur 2 entlang der Schnittlinie A-A. Dabei hat das Klebeetikett 14 einen mehrschichtigen Aufbau und umfasst eine Folie 18, bei der es sich um eine gegossene Acrylatfolie handelt. Der optisch erfassbare Code 12 ist mittels Thermotransferdruck auf die Folie 18 aufgedruckt, wobei eine Polyesterfolie als Farbband verwendet wurde. Der optisch erfassbare Code 12 ist von einem durchsichtigen Schutzlaminat 22 abgedeckt. Bei dem Schutzlaminat 22 handelt es sich ebenfalls um eine gegossene Acrylatfolie, wobei diese mit einem Acrylatkleber 20 auf die bedruckte Seite der Folie 18 aufgeklebt ist. Schließlich weist das Klebeetikett 14 noch eine Schicht aus einem Acrylatkleber 16 auf, bei dem es sich um einen PNS-Acrylatkleber (PNS = permanent haftender Niedrigtemperatur-Sonderklebstoff) handelt, mit dem das Klebetikett 14 auf die Außenseite des Gastronorm-Behälters 10 aufgeklebt ist.

Figur 4 zeigt schematisch eine zentrale Datenbank 32 mit einem Datenfeld 30, das mit dem maschinenlesbaren Codeabschnitt 24 verknüpft ist. Das Datenbankfeld 30 kann eine beliebige Größe und gegebenenfalls (komplexe) Struktur aufweisen, so dass man es gegebenenfalls auch als Datensatz bezeichnen könnte. Das Datenbankfeld 30 enthält beispielsweise Informationen über den Besitzer des Gastronorm-Behälters 10, den Eigentümer des Gastronorm-Behälters 10, den Inhalt des Gastronorm-Behälters 10, den Hersteller des Inhalts des Gastronorm-Behälters 10, die Haltbarkeit des Inhalts des Gastronorm-Behälters 10, die Soll-Temperatur des Inhalts des Gastronorm-Behälters 10, die zu einem früheren Zeitpunkt erfasste Ist-Temperatur des Inhalts des Gastronorm-Behälters 10, den Transportweg des Gastronorm-Behälters 10, das Ziel des Gastronorm-Behälters 10 und/oder die Herkunft des Gastronorm-Behälters 10. Diese Informationen können zumindest teilweise derart in die Datenbank 32 eingegeben werden, dass ein Benutzer des Gastronorm-Behälters 10 mit einer Smartphone-Kamera zunächst den maschinenlesbaren Codeabschnitt 24 in Form des QR-Codes abfotografiert, wobei eine vorzugsweise auf dem Smartphone laufende App den QR-Code auswertet, um anschließend eine Verbindung zu der zentralen Datenbank 32 herzustellen und dort auf das Datenbankfeld 30 zuzugreifen. Alternativ zur Verwendung von Smartphones ist selbstverständlich auch der Einsatz von professionellen Scannern möglich, insbesondere wenn kurze Durchlaufzeiten erforderlich sind, und/oder wenn große Stückzahlen zu verarbeiten sind. Anschließend (oder auch vor dem Zugriff auf die Datenbank 32) kann der Benutzer beispielsweise mit Hilfe eines handgehaltenen Temperaturfühlers die Ist-Temperatur des Inhalts des Gastronorm-Behälters 10 erfassen und diese Temperatur auf das Smartphone übertragen (beispielsweise automatisch mittels Bluetooth), um über die Verbindung zwischen dem Smartphone und der zentralen Datenbank 32, die in dem Datenbankfeld 30 gespeicherte Ist-Temperatur zu aktualisieren.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Gastronorm-Behälter
- 12: optisch erfassbarer Code
- 14: Klebeetikett
- 16: Acrylatkleber
- 18: Folie
- 22: Schutzlaminat
- 24: maschinenlesbarer Codeabschnitt
- 26: menschenlesbarer Codeabschnitt, erster Teil
- 28: menschenlesbarer Codeabschnitt, zweiter Teil
- 30: Datenbankfeld
- 32: zentrale Datenbank

## Patentansprüche

1. Gastronorm-Behälter (10), der zur eindeutigen Identifizierbarkeit auf seiner Außenseite einen optisch erfassbaren Code (12) trägt, **dadurch gekennzeichnet, dass** der optisch erfassbare Code (12) mittels eines Klebeetiketts (14) aufgebracht ist, dass das Klebeetikett (14) einen Acrylatkleber (16) und eine Folie (18) umfasst, auf die der optisch erfassbare Code (12) aufgedruckt ist, und dass die Folie (18) mit ihrer nicht bedruckten Seite mithilfe des Acrylatklebers (16) so auf die Außenseite des Gastronorm-Behälters (10) aufgeklebt ist, dass sie ohne Zerstörung nicht mehr ablösbar ist, wobei das Klebeetikett (14) dazu ausgelegt ist, den Gastronorm-Behälter (10) ohne Beschädigung des Klebeetiketts (14) in einem Temperaturbereich von -40 °C bis 180 °C dauerhaft verwenden zu können.

2. Gastronorm-Behälter (10) nach Anspruch 1, **dadurch gekennzeichnet, dass** es sich bei der Folie (18) um eine gegossene Acrylatfolie handelt.

3. Gastronorm-Behälter (10) nach Anspruch 1 oder 2, **dadurch gekennzeichnet, dass** es sich bei dem Acrylatkleber (16) um einen PNS-Acrylatkleber (PNS = permanent haftender Niedrigtemperatur-Sonderklebstoff) handelt.

4. Gastronorm-Behälter (10) nach einem der vorhergehenden Ansprüche, **dadurch gekennzeichnet, dass** das Klebeetikett (14) ein Schutzlaminat (22) umfasst, mit dem der aufgedruckte Code abgedeckt ist.

5. Gastronorm-Behälter (10) nach Anspruch 4, **dadurch gekennzeichnet, dass** das Schutzlaminat (22) lebensmittelecht ist.

6. Gastronorm-Behälter (10) nach Anspruch 4 oder 5, **dadurch gekennzeichnet, dass** das Schutzlaminat (22) eine durchsichtige gegossene Acrylatfolie ist, die mit einem Acrylatkleber (20) auf die bedruckte Seite der Folie (18) aufgeklebt ist.

7. Gastronorm-Behälter (10) nach einem der vorhergehenden Ansprüche, **dadurch gekennzeichnet, dass** der optisch erfassbare Code (12) mittels Thermotransferdruck auf die Folie (18) aufgedruckt ist.

8. Gastronorm-Behälter (10) nach einem der vorhergehenden Ansprüche, **dadurch gekennzeichnet, dass** der optisch erfassbare Code (12) einen maschinenlesbaren Codeabschnitt (24) und einen menschenlesbaren Codeabschnitt (26, 28) umfasst.

9. Gastronorm-Behälter (10) nach Anspruch 8, **dadurch gekennzeichnet, dass** die durch den menschenlesbaren Codeabschnitt (26, 28) dargestellte Information auch in der durch den maschinenlesbaren Codeabschnitt (24) dargestellten Information enthalten ist.

10. Gastronorm-Behälter (10) nach Anspruch 8 oder 9, **dadurch gekennzeichnet, dass** ein erster Teil (26) des menschenlesbaren Codeabschnitts (26, 28) eine eindeutige Kennung und ein zweiter Teil (28) des menschenlesbaren Codeabschnitts (26, 28) eine im Hinblick auf die eindeutige Kennung eindeutige ansonsten aber mehrdeutige Kennung aufweist.

11. Gastronorm-Behälter (10) nach einem der Ansprüche 8 bis 10, **dadurch gekennzeichnet, dass** der maschinenlesbare Codeabschnitt (24) in Form eines QR-Codes vorliegt.

12. Gastronorm-Behälter (10) nach einem der vorhergehenden Ansprüche, **dadurch gekennzeichnet, dass** der optisch erfassbare Code (12) mindestens ein Datenbankfeld (30) in einer zentralen Datenbank (32) referenziert, das Informationen über wenigstens ein Element der folgenden Gruppe enthält: Besitzer des Gastronorm-Behälters, Eigentümer des Gastronorm-Behälters, Inhalt des Gastronorm-Behälters, Hersteller des Inhalts des Gastronorm-Behälters, Haltbarkeit des Inhalts des Gastronorm-Behälters, Solltemperatur des Inhalts des Gastronorm-Behälters, zu einem früheren Zeitpunkt erfasste Isttemperatur des Inhalts des Gastronorm-Behälters, Transportweg des Gastronorm-Behälters, Ziel des Gastronorm-Behälters, Herkunft des Gastronorm-Behälters.

13. Klebeetikett zur Umwandlung eines handelsüblichen Gastronorm-Behälters in einen Gastronorm-Behälter nach einem der Ansprüche 1 bis 12.

14. Bogen mit einer Vielzahl von Klebeetiketten nach Anspruch 13.
